# EUROPÄISCHE PATENTSCHRIFT

(11) **EP 1 393 809 B1**
(45) Veröffentlichungstag und Bekanntmachung des Hinweises auf die Patenterteilung: **15.06.2005**
(21) Anmeldenummer: 03019051.6
(22) Anmeldetag: 22.08.2003
(51) Int. Cl.: B02C 18/00, B65F 5/00

(54) **Entsorgungs- und Feuerlöscheinrichtung für von Dokumentenvernichtern erzeugte Partikel**
Disposal and fire-fighting system for particles generated by multiple paper shredders
Système d'evacuation et de lutte contre l'incendie pour des particules produites par des destructeurs de papiers

(30) Priorität: 28.08.2002 DE 10240587
(43) Veröffentlichungstag der Anmeldung: 03.03.2004
(73) Patentinhaber: SCHLEICHER & Co. INTERNATIONAL AG, 88677 Markdorf/Bodensee (DE)
(72) Erfinder: Dieck, E. Leopold, Dr., 88212 Ravensburg (DE); Reck, Peter, Dr., 88131 Lindau (DE)
(74) Vertreter: Patentanwälte Ruff, Wilhelm, Beier, Dauster & Partner

(56) Entgegenhaltungen:
- DE-A- 19 934 818
- JP-A- 2000 016 511

## Beschreibung

Die Erfindung betrifft eine Entsorgungseinrichtung für von Dokumentenvernichtern erzeugte Partikel, wie Flachmaterialstücke oder -streifen aus Papier, Folien oder dgl..

Die DE 199 34 818 A1 beschreibt eine solche Einrichtung mit einem in einem Gebäude verlegten Leitungsnetz, das mehrere Anschlüsse für Dokumentenvernichter aufweist und einer Absaugeinrichtung, die von den Dokumentenvernichtem entfernt angeordnet ist. Dieses System ermöglicht es, die bei der Dokumentenvernichtung anfallenden Partikel zentral an einen für das Gebäude oder gar eine Gruppe von Gebäuden zentralen Ort zu transportieren, zu lagern, ggf. zu bündeln oder zu pressen oder abzutransportieren. Ein anderes Beispiel einer Entsorgungseinrichtung für Dokumentenvernichtern erzeugte Partikel zeigt das Dokument JP 2000 01 6511 A.

### Aufgabe und Lösung

Aufgabe der Erfindung ist es, eine solche Entsorgungseinrichtung und insbesondere ihr Leitungsnetz noch vielfältiger nutzbar zu machen.

Diese Aufgabe wird dadurch gelöst, dass an das Leitungsnetz ein Feuerlöschsystem angeschlossen ist. Dieses arbeitet mit einer Löschmittelquelle, die ein gasförmiges bzw. gasgetragenes Feuerlöschmittel, beispielsweise ein Aerosol, in das Leitungsnetz einbringt. Dieses hat Austrittsöffnungen, die beim Absaugbetrieb geschlossen sind.

Vorteilhaft können die Dokumentenvernichter Anschlüsse mit automatisch wirkenden Verschlüssen haben. Es ist aber auch möglich, dafür gesteuerte Verschlüsse zu benutzen, beispielsweise elektrisch oder druckluftgesteuerte Klappen etc..

Da sich Strömungsrichtung und Druckverhältnisse in diesem Leitungsnetz sich zwischen dem Partikelabsaugbetrieb und dem Feuerlöschbetrieb generell unterscheiden, können die Verschlüsse für die Dokumentenvernichter und/oder die Austrittsöffnungen auch Rückschlagklappen sein. Im Absaugbetrieb herrscht Unterdruck im Leitungsnetz, so dass Rückschlagklappen an den Austrittsöffnungen für das Feuerlöschmittel entsprechend ihrer Anordnung geschlossen sind, während entsprechende Verschlüsse an den Dokumentenvernichtern geöffnet sind. Um jedoch die Absaugung von den Dokumentenvernichtern konzentriert auf die im Betrieb befindlichen Dokumentenvernichter zu richten, kann bei den Dokumentenvernichtern ein Verschluss vorgesehen sein, der nur bei Betrieb des Dokumentenvernichters geöffnet wird. Dann erübrigen sich unter Umständen die zusätzlichen Verschlüsse für den Feuerlöschbetrieb. Wenn dagegen beim Feuerlöschbetrieb Löschmittel in Gasoder Aerosolform in das Leitungsnetz eingeleitet wird, dann öffnen sich die Austrittsöffnungen selbsttätig. Es ist jedoch zweckmäßig, die Austrittsöffnungen selektiv beschränkt auf die vom Feuer betroffenen Stellen zu öffnen, was über eine Steuerung entsprechend den Signalen von Feuermeldern geschehen kann, die auch die Löschmittelquelle selbst aktivieren. Bei Anwendung in einem Gebäude mit nur wenigen Räumen, beispielsweise mit einem Großraumbüro, kann jedoch die Löschmittelquelle auf sämtliche Austrittsöffnungen gleichzeitig wirken. Es muss dabei natürlich sichergestellt werden, dass dadurch eventuell in den Räumen eingeschlossene Personen nicht gefährdet werden.

Bei einem solchen über ein Leitungsnetz wirkenden Löschsystem besteht das Problem, dass die Leitungen normalerweise luftgefüllt sind und dabei das Feuer zuerst "anblasen". Es ist daher zweckmäßig, dem System eine Ausblasöffnung zuzuordnen, die zu Beginn der Löschmitteleinspeisung den Inhalt des Leitungsnetzes ins Freie abbläst, danach aber wieder verschlossen wird. Im vorliegenden Falle würden dabei auch eventuell noch im Leitungssystem befindliche brennbare Partikel mit ausgeblasen, so dass diese nicht in die vom Feuer beeinträchtigten Räume gelangen.

Das System ermöglicht es also, ein in dem entsprechenden Gebäude verlegtes Leitungsnetz mehrfach zu nutzen. Es könnten zusätzlich zu den beschriebenen Anschlüssen auch noch Anschlüsse für ein Staubabsaugesystem am gleichen Leitungsnetz vorgesehen sein, an das beispielsweise Staubsaugschläuche für die Raumreinigung anschließbar sind. Durch die Mehrfachnutzung des Leitungssystems werden Bau- und Wartungskosten gespart und damit Nutzraum im Gebäude gewonnen.

### Kurzbeschreibung der Zeichnungen

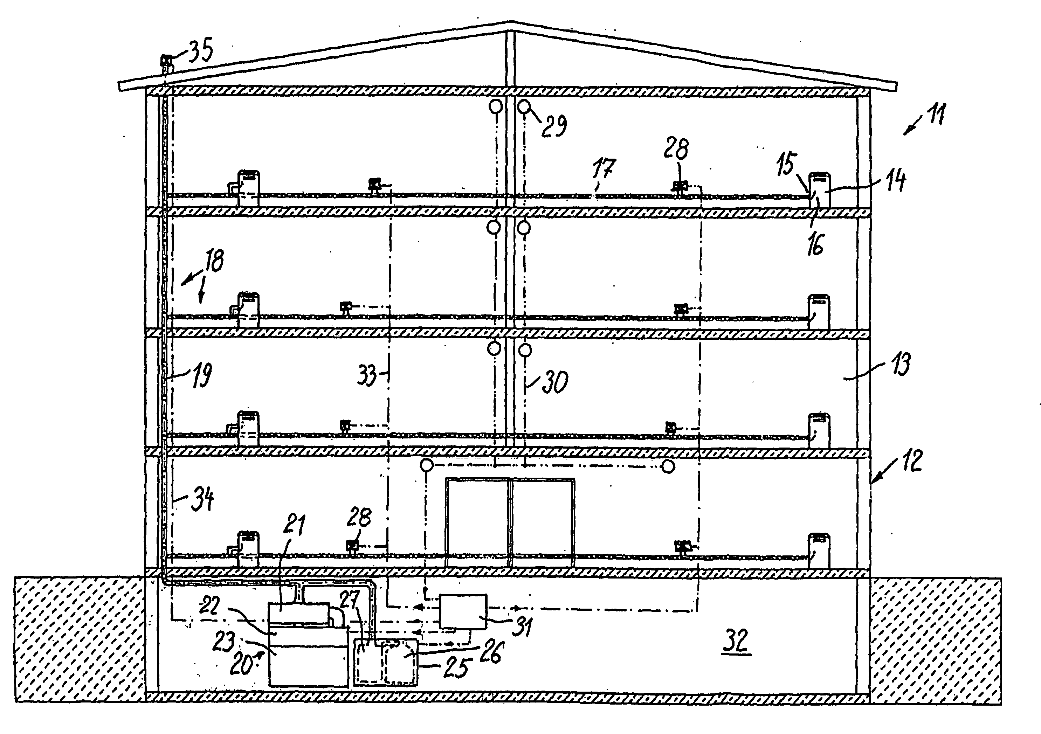

Ein Ausführungsbeispiel der Erfindung ist in der Zeichnung dargestellt und wird im Folgenden näher erläutert. Die einzige Zeichnungsfigur zeigt:
einen schematischen Querschnitt durch ein Gebäude mit einer Entsorgungseinrichtung nach der Erfindung.

### Detaillierte Beschreibung des Ausführungsbeispiels

Das in der Zeichnung gezeigte Gebäude 11 hat mehrere Stockwerke 12 und darin jeweils mehrere Räume 13. Im dargestellten Beispiel ist in jedem Raum ein Dokumentenvernichter 14 aufgestellt. Es handelt sich dabei um Dokumentenvernichter für die verschiedensten Zwecke mit Schneidwerken, die normalerweise aus zwei gegenläufig angetriebenen Walzen bestehen, die ineinander eingreifen und aus den eingeführten Dokumenten Partikel herstellen, die entweder in Form kleiner Papierstücke (Partikelschneider) anfallen oder als Streifen. Derartige Schneidwerke sind beispielsweise in den DE 36 16 554 A1, DE 41 21 407 und zahlreichen anderen Patentanmeldungen der Anmelderin beschrieben. Während übliche Dokumenvernichter einen Fangkorb für die Partikel aufweisen, haben die Dokumentenvernichter 14 stattdessen lediglich einen Auffangbehälter, beispielsweise in Trichterform, der in einen Dokumentenvernichteranschluss 15 mündet. Diesem kann ein Verschluss 16 zugeordnet sein, der in der Zeichnung als eine Klappe angedeutet ist, jedoch vorzugsweise zusammen mit der Einschaltung des Dokumentenvernichters geöffnet und nach seinem Abschalten wieder geschlossen wird. Es könnte aber auch eine Rückschlagklappe vorgesehen sein, die in Absaugrichtung öffnet.

Der Dokumentenvernichteranschluss 15 ist jeweils mit einem Zweig 17 eines Leitungsnetzes 18 verbunden, das aus Rohren nicht zu kleinen Durchmessers besteht und im Gebäude vorzugsweise fest verlegt ist. Das System kann mehrere Zweige 17 haben, die in eine Hauptleitung 19 münden, die über alle Stockwerke zu einer Absaugeinrichtung 20 führt. Die Absaugeinrichtung hat ein Sauggebläse 21, Filter 22 mit einem Reinluftauslass, der ggf. auch ins Freie geführt sein kann, und einem Behälter 23 für die Partikel. Bei dem Behälter kann es sich um einen Container oder beispielsweise um eine Ballenpresse handeln, die die Partikel raumsparend verdichtet. Ein nicht dargestelltes elektronisches Leitungsnetz sorgt dafür, dass die Absaugeinrichtung eingeschaltet wird, wenn ein Dokumentenvernichter benutzt wird. Es ist jedoch auch möglich, die Absaugeinrichtung z.B. zeitgesteuert periodisch zu betreiben, wobei dann in den Dokumentenvernichtern jeweils in einem Zwischenspeicher gespeicherte Partikel von allen Vernichtern gleichzeitig abgesaugt werden. In diesem Falle könnte der Verschluss 16 lediglich vom Unterdruck in dem Leitungsnetz geöffnet werden.

An das Leitungsnetz 18 ist außerdem eine Löschmittelquelle 25 angeschlossen, die zusammen mit dem Leitungsnetz 18 ein Feuerlöschsystem bildet. Es kann beispielsweise einen Druckgasbehälter 26 mit einem inerten Gas, wie Stickstoff, CO₂ oder dgl., enthalten und/oder eine Aufbereitungseinrichtung 27 zur Herstellung eines Löschaerosols, das in das Leitungsnetz unter Druck eingeleitet werden kann.

Zum Feuerlöschsystem gehören Auslässe 28, die in den an das Feuerlöschsystem angeschlossenen Räumen 13 des Gebäudes an jeweils geeigneten Stellen angeordnet sind, die mit dem Aufstellungsort der Dokumentenvernichter übereinstimmen können oder auch an anderen Stellen vorgesehen sein können.

In einer einfachsten Ausführung können diese Auslässe Rückschlagklappen sein, die bei einem Überdruck in dem Leitungsnetz öffnen und bei Unterdruck geschlossen sind. Vorzugsweise werden jedoch die Auslässe elektrisch, durch Druckluft oder dgl. selektiv angesteuert, und zwar in Abhängigkeit von Feuermeldern 29, die in den entsprechenden Räumen vorgesehen sind. Sie melden über elektronische Signalleitungen 30, beispielsweise eine BUS-Leitung mit entsprechender Kodierung ein Ausbrechen des Feuers an ein Steuergerät 31, das zusammen mit der Absaugeinrichtung 20 und der Löschmittelquelle 25 zusammen in einem besonders feuergeschützten Bereich des Gebäudes, hier im Untergeschoss 32, vorgesehen ist. Dieses gibt entsprechende Steuersignale ab, die bei Auslösung des Feueralarms die Absaugeinrichtung 20 abschalten, die Löschmittelquelle 25 aktivieren und über einen Signalleitungsstrang 33 die Auslässe 28 in dem jeweils vom Feuer betroffenen Bereich öffnen. Vorher wird jedoch über eine Signalleitung 34 eine ins Freie mündende Ausblasöffnung 35 so lange geöffnet, bis zumindest aus der Hauptleitung die darin enthaltene Luft zusammen mit evtl. noch darin befindlichen Partikeln ausgeblasen ist. Danach schließt sich die Ausblasöffnung wieder und über die nunmehr geöffneten Auslässe 28 wird das Löschmittel in den vom Feuer betroffenen Bereich geleitet.

Es ist also zu erkennen, dass sowohl die Absaugung der zu entsorgenden Partikel als auch das Feuerlöschsystem durch die Erfindung in idealer Weise ineinander integriert sind und auf dasselbe Leitungssystem zurückgreifen können, ohne dass dadurch die Wirkung des einen oder des anderen beeinträchtigt wird.

## Patentansprüche

1. Entsorgungseinrichtung für von Dokumentenvernichtern erzeugte Partikel, wie Flachmaterialstücke oder -streifen aus Papier, Folien oder dlg.,
1.1 mit einem in wenigstens einem Gebäude verlegten Leitungsnetz (18),
1.2 das mehrere Anschlüsse (15) für Dokumentenvernichter (14) aufweist und
1.3 mit einer Absaugeinrichtung (20),
1.4 die von den Dokumentenvernichtern (14) entfernt angeordnet ist,
**dadurch gekennzeichnet, dass**
1.5 an das Leitungsnetz (18) ein Feuerlöschsystem
1.6 mit einer gasförmiges bzw. gasgetragenes Feuerlöschmittel entsendenden Löschmittelquelle (25) angeschlossen ist und
1.7 das Leitungsnetz (18) beim Absaugbetrieb geschlossene Auslässe (28) in das Gebäude (11) enthält.

2. Entsorgungseinrichtung nach Anspruch 1, **dadurch gekennzeichnet, dass** die Dokumentenvernichteranschlüsse (15) mit vorzugsweise automatisch wirkenden Verschlüssen (16) versehen sind.

3. Entsorgungseinrichtung nach Anspruch 1 oder 2, **dadurch gekennzeichnet, dass** die Verschlüsse (16) und/oder die Auslässe (28) luftgesteuert, vorzugsweise als Rückschlagklappen, ausgebildet sind.

4. Entsorgungseinrichtung nach einem der vorhergehenden Ansprüche, **gekennzeichnet durch** eine Steuerung (31), die ggf. von Feuermeldern (29) aktivierbar ist und ein Einspeisesignal für die Löschmittelquelle (25) und, vorzugsweise vor diesem, ein Abschaltsignal für die Absaugeinrichtung (20) erzeugt.

5. Entsorgungseinrichtung nach Anspruch 4, **dadurch gekennzeichnet, dass** die Steuerung (31) die Auslässe (28) selektiv entsprechend den Signalen einzelner zugeordneter Feuermelder (29) zu deren Öffnung ansteuert.

6. Entsorgungseinrichtung nach einem der vorhergehenden Ansprüche, **gekennzeichnet durch** eine Ausblasöffnung (35) des Leistungsnetzes (18) ins Freie, die zu Beginn der Löschmitteleinspeisung öffenbar und kurz danach wieder schließbar ist.

7. Entsorgungseinrichtung nach einem der vorhergehenden Ansprüche, **dadurch gekennzeichnet, dass** das Löschmittel ein Aerosol ist.

## Claims

1. Disposal device for particles produced by document shredders such as flat material pieces or strips of paper, films or the like,
1.1 having a line network (18) laid in at least one building,
1.2 having several connections (15) for document shredders (14) and
1.3 having a suction device (20),
1.4 positioned remote from the document shredders (14),
**characterized in that**
1.5 to the line network (18) is connected a fire extinguishing system
1.6 having a gaseous or gas-supported fire extinguishing substance-dispatching extinguishing substance source (25) and
1.7 during suction operation the line network (18) contains closed outlets (28) in building (11).

2. Disposal device according to claim 1, **characterized in that** the document shredder connections (15) are provided with preferably automatically acting closures (16).

3. Disposal device according to claim 1 or 2, **characterized in that** the closures (16) and/or outlets (28) are constructed in air-controlled manner, preferably as check valves.

4. Disposal device according to one of the preceding claims, **characterized by** a control means (31), which is optionally activatable by fire detectors (29) and produces a feed signal for the extinguishing substance source (25) and, preferably prior to this, a disconnection signal for the suction device (20).

5. Disposal device according to claim 4, **characterized in that** the control means (31) controls the outlets (28) selectively corresponding to the fire detectors (29) individually associated with the signals for the opening thereof.

6. Disposal device according to one of the preceding claims, **characterized by** a blowout opening (35) of the line network (18) into the open, which can be opened at the start of extinguishing substance feed and can be closed again shortly thereafter.

7. Disposal device according to one of the preceding claims, **characterized in that** the extinguishing substance is an aerosol.

## Revendications

1. Système d'évacuation de particules produites par des destructeurs de documents, telles que des morceaux plats ou des bandes plates de papier, des pellicules ou similaires,
1.1 avec un réseau de distribution (18) établi dans au moins un bâtiment,
1.2 le réseau présentant plusieurs dérivations (15) pour destructeurs de documents (14) et
1.3 avec un système d'aspiration (20),
1.4 qui est disposé à une certaine distance des destructeurs de documents (14),
**caractérisé en ce que**
1.5 au réseau de distribution (18) est raccordé un système d'extinction d'incendies
1.6 avec une source d'agents extincteurs (25) émettant des agents extincteurs gazeux ou encore propulsés à gaz et
1.7 que le réseau de distribution (18) comprend, pendant le service d'aspiration, des sorties (28) dans le bâtiment (11), qui sont fermées.

2. Système d'évacuation d'après la revendication 1, **caractérisé en ce que** les raccords aux destructeurs de documents (15) sont munis de fermetures (16) agissant préférablement de manière automatique.

3. Système d'évacuation d'après la revendication 1 ou 2, **caractérisé en ce que** les fermetures (16) et/ou les sorties (28) sont réalisées de manière à être commandées à air comprimé, de préférence en tant que clapet anti-retour.

4. Système d'évacuation d'après une des revendications précédentes, **caractérisé par** une commande (31), qui peut être éventuellement activée par des avertisseurs d'incendie (29) et qui produit un signal d'entrée pour la source d'agents extincteurs (25) et, de préférence avant celui-ci, un signal d'arrêt pour le système d'aspiration (20).

5. Système d'évacuation d'après la revendication 4, **caractérisé en ce que** la commande (31) commande les sorties (28) en vue de leur ouverture de manière sélective selon les signaux des respectifs avertisseurs d'incendie (29) associés.

6. Système d'évacuation d'après une des revendications précédentes, **caractérisé par** une ouverture de purge (35) du réseau de distribution (18) vers l'extérieur, qui peut s'ouvrir au début de l'amenée d'agents extincteurs et qui peut être ensuite fermée.

7. Système d'évacuation d'après une des revendications précédentes, **caractérisé en ce que** l'agent extincteur est un aérosol.
